(19) Europäisches Patentamt
European Patent Office
Office européen des brevets

(11) EP 4 576 265 A1

(12) # EUROPEAN PATENT APPLICATION
published in accordance with Art. 153(4) EPC

(43) Date of publication:
**25.06.2025 Bulletin 2025/26**

(21) Application number: **23921968.6**

(22) Date of filing: **17.02.2023**

(51) International Patent Classification (IPC):
***H01M 4/60*** *(2006.01)* ***H01M 10/058*** *(2010.01)*
***C08F 218/08*** *(2006.01)*

(52) Cooperative Patent Classification (CPC):
**C08F 218/08; H01M 4/60; H01M 10/058;**
Y02E 60/10

(86) International application number:
**PCT/CN2023/076809**

(87) International publication number:
**WO 2024/168818 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **PENG, Shuangjuan**
**Ningde, Fujian 352100 (CN)**
- **PENG, Lin**
**Ningde, Fujian 352100 (CN)**
- **LI, Baiqing**
**Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **POLYMER, ELECTRODE SHEET, AND RELATED BATTERY CELL, BATTERY AND ELECTRIC APPARATUS**

(57) Provided in the present application are a polymer, an electrode sheet, and a related battery cell, a battery and an electric apparatus. The polymer comprises an ester polymer, and is applied to a battery cell. The polymer comprises the ester polymer, wherein the ester polymer is made into a sheet-shaped structure, which is subjected to a dynamic frequency scanning test at the temperature of ($T_m$+20)°C to obtain an elastic modulus G'-loss modulus G" curve, the slope of the elastic modulus G'-loss modulus G" curve being K, $1 < K < \infty$, and Tm ° C representing the melting temperature of the ester polymer. The present application can improve the cycle performance and storage performance of a battery cell.

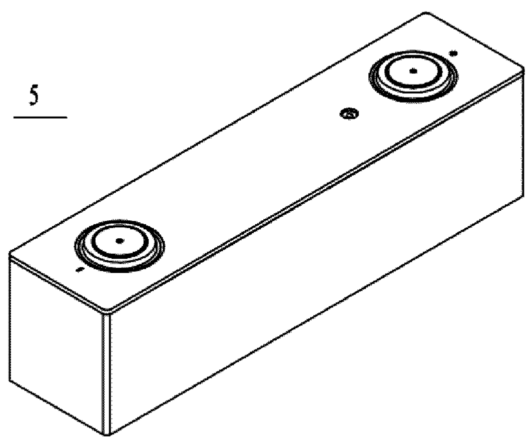


FIG. 1

EP 4 576 265 A1

## Description

## TECHNICAL FIELD

This application relates to the field of batteries, and specifically, to a polymer, an electrode plate, and a battery cell, battery, and electric apparatus related thereto.

## BACKGROUND

Battery cells have characteristics such as high capacity and long service life, and thus are widely used in electronic devices such as mobile phones, laptop computers, electric bicycles, electric vehicles, electric airplanes, electric ships, electric toy cars, electric toy ships, electric toy airplanes, and electric tools.

With increasingly wide use of batteries, the requirements on the performance of battery cells are increasingly stringent. To improve the safety performance of the battery cells, the performance of electrode plates in the battery cells is typically optimized and improved. However, the interface performance of active substances in the electrode plates is poor at present, resulting in poor cycling performance and storage performance of the battery cells when the electrode plates are used in the battery cells.

## SUMMARY

This application has been made in view of the foregoing issues, with an objective to provide a polymer, an electrode plate, and a battery cell, battery, and electric apparatus related thereto.

According to a first aspect of this application, a polymer is provided. The polymer is applied to battery cells, and the polymer includes an ester polymer, where the ester polymer is made into a sheet structure; and the sheet structure undergoes dynamic frequency scanning testing at $(T_m+20)$°C to obtain an elastic modulus G'-energy loss modulus G" curve, where a slope of the elastic modulus G'-energy loss modulus G" curve is K, $1<K<\infty$, and $T_m$°C represents a melting temperature of the ester polymer.

Thus, when the polymer of this application meets the above range, a molecular chain entanglement state can be further reduced, facilitating the diffusion of solvent molecules in an electrolyte between molecular chains. In addition, the polymer still maintains a certain molecular chain entanglement state, so that the solvent molecules can be locked in situ in the polymer, the risk of dissolution of the polymer in the electrolyte can be reduced, and the performance stability of the polymer can be improved. Furthermore, this helps the polymer to form a protective layer on the surface of an active substance, improving the solid-liquid interface performance, thereby reducing side reactions between the active substance and the electrolyte, and improving the cycling performance and storage performance of the battery cell.

In some embodiments, $1<K\leq100$, optionally $1<K\leq10$.

In some embodiments, a glass transition temperature of the ester polymer is Tg, in °C, where $-100\leq Tg\leq50$, optionally $-80\leq Tg\leq30$. The glass transition temperature of the polymer is relatively low, the chain segment flexibility of the molecular chains is higher, and adjacent molecular chains are opened more easily.

In some embodiments, the ester polymer includes a structural unit shown in formula (I),

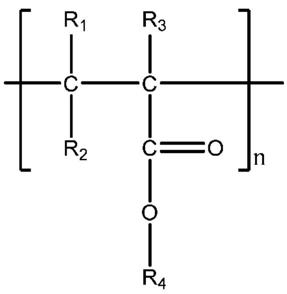

formula (I);

where in the formula (I), $R_1$, $R_2$, and $R_3$ each independently include a hydrogen atom or a substituted or unsubstituted C1-C8 alkyl group; and $R_4$ includes a substituted or unsubstituted C1-C8 alkyl group or a substituted or unsubstituted C1-C8 hydroxyalkyl group; optionally, $R_1$ includes a hydrogen atom or a substituted or unsubstituted methyl group; $R_2$ and $R_3$ each independently include a hydrogen atom; and $R_4$ includes a substituted or unsubstituted C1-C6 alkyl group or a substituted or unsubstituted C1-C6 hydroxyalkyl group; and optionally, $R_4$ includes a substituted or unsubstituted C1-C4 alkyl group or a substituted or unsubstituted C1-C4 hydroxyalkyl group.

In some embodiments, the ester polymer includes at least one of structural units shown in formula (I-1) to formula

(I-15):

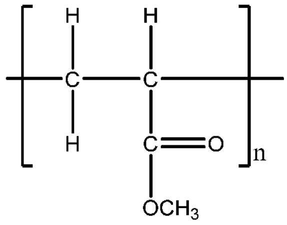

formula (I-1),

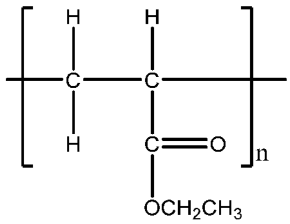

formula (I-2),

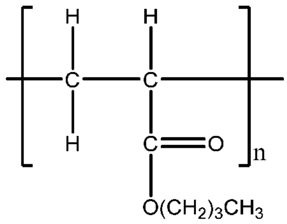

formula (I-3),

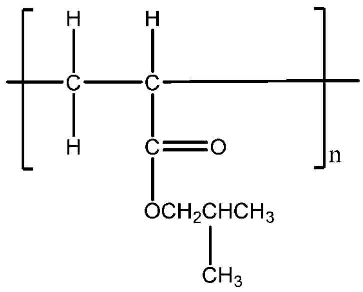

formula (I-4),

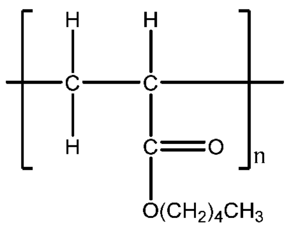

formula (I-5),

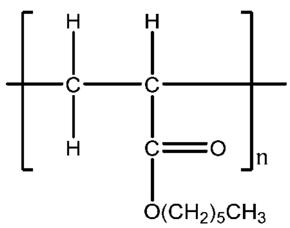

formula (I-6),

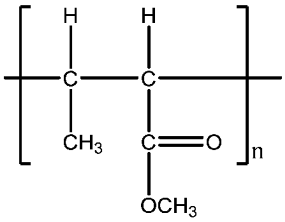

formula (I-7),

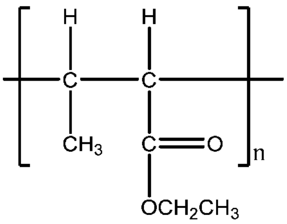

formula (I-8),

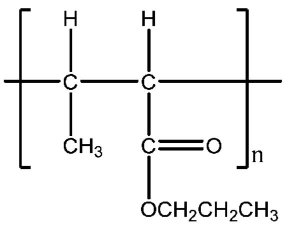

formula (I-9),

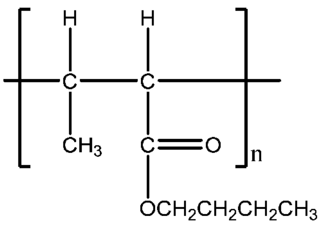

formula (I-10),

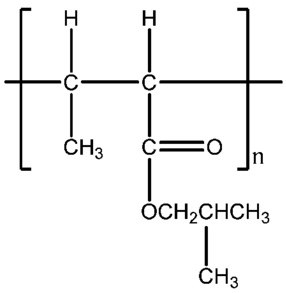

formula (I-11),

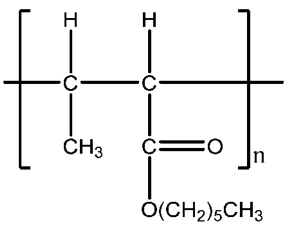

formula (I-12),

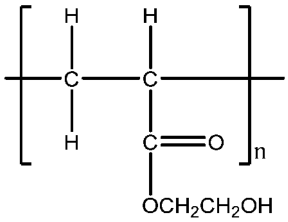

formula (I-13),

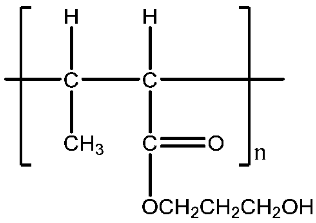

formula (I-14),

and

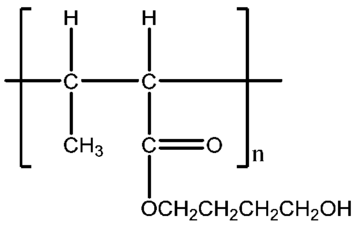

formula (I-15).

In some embodiments, the ester polymer includes a structural unit shown in formula (II),

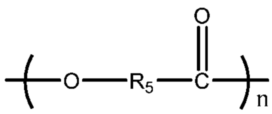

formula (II);

where in the formula (II), $R_5$ includes a substituted or unsubstituted C2-C6 methylene group; and optionally, $R_5$ includes a substituted or unsubstituted C2-C4 methylene group.

In some embodiments, the ester polymer includes at least one of structural units shown in formula (II-1) to formula (II-5):

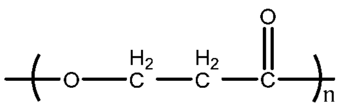

formula (II-1),

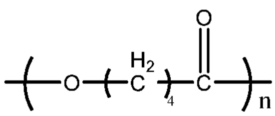

formula (II-2),

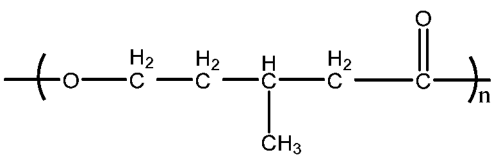

formula (II-3),

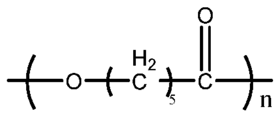

formula (II-4),

and

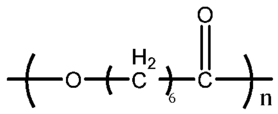

formula (II-5).

In some embodiments, n is selected from positive integers from 800 to 20000; and/or a molecular weight of the ester polymer is $1.2\times10^5$ g/mol to $1.0\times10^6$ g/mol. The molecular weight of the polymer falling within the above range can ensure that the polymer exhibits a certain solubility in the electrolyte and is not easily dissolved and dispersed fully in the electrolyte, helping to control the distribution and dispersion of the polymer on the surface of the active substance. In addition, the flexibility between the molecular chains of the polymer can be further improved, and action forces between the molecular chains are relatively weak. This helps the solvent molecules in the electrolyte to open the molecular chains, enter the molecular chains, and be encapsulated by the molecular chains. Thus, this helps active ions to enter the active substance through a solvent, implementing smooth and rapid migration of the active ions.

In some embodiments, the polymer is added into a first solvent at 45°C to form a polymer system; the polymer system is left standing at 45°C for 8 h; and after left standing at 25°C for 24 h or more, the polymer system is filtered through a 200-mesh filter to obtain a residual first substance; where a mass of the polymer is n, in g; a mass of the first substance is m, in g; and the polymer and the first substance satisfy: $5\leq m/n\leq1000$.

Thus, this application can achieve the extension of the molecular chains of the polymer in a safe working temperature range of the battery cell by increasing the temperature, thereby facilitating the mutual attraction and physical bonding between the molecular chains of the polymer and the solvent. At room temperature, the activity of polymer molecular chain segments decreases, so that the polymer remains adhered to the surface of the active substance, the electrolyte is locked in a spatial environment where the polymer is located, and a state similar to in-situ gel is formed. This maintains normal transmission of lithium ions while protecting an active substance interface, thereby establishing interface protection, reducing surface side reactions, and improving the cycling performance and storage performance.

According to a second aspect of this application, a positive electrode plate is provided. The positive electrode plate includes a positive electrode current collector and a positive electrode active substance layer disposed on the positive electrode current collector, where the positive electrode active substance layer includes a positive electrode active substance and a polymer, and the polymer includes the polymer according to any one of the embodiments of the first aspect of this application.

According to a third aspect of this application, a negative electrode plate is provided. The negative electrode plate includes a negative electrode current collector and a negative electrode active substance layer disposed on the negative electrode current collector, where the negative electrode active substance layer includes a negative electrode active substance and a polymer, and the polymer includes the polymer according to any one of the embodiments of the first aspect of this application.

According to a fourth aspect of this application, a battery cell is provided. The battery cell includes a positive electrode plate and a negative electrode plate, where the positive electrode plate includes the positive electrode plate according to any one of the embodiments of the second aspect; and/or the negative electrode plate includes the negative electrode plate according to any one of the embodiments of the third aspect of this application.

According to a fifth aspect of this application, a battery is provided, including the battery cell according to the fourth aspect of this application.

According to a sixth aspect of this application, an electric apparatus is provided, including the battery according to the fifth aspect of this application.

## BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.

FIG. 1 is a schematic diagram of a battery cell according to an embodiment of this application.
FIG. 2 is a schematic exploded view of the battery cell according to the embodiment shown in FIG. 1.
FIG. 3 is a schematic diagram of a battery module according to an embodiment of this application.
FIG. 4 is a schematic diagram of a battery pack according to an embodiment of this application.
FIG. 5 is a schematic exploded view of the battery pack according to the embodiment shown in FIG. 4.
FIG. 6 is a schematic diagram of an electric apparatus using a battery cell as a power source according to an embodiment of this application.

The accompanying drawings are not necessarily drawn to scale.
Description of reference signs:

1. battery pack; 2. upper box body; 3. lower box body; 4. battery module;
5. battery cell; 51. housing; 52. electrode assembly;
53. cover plate; and
6. electric apparatus.

**DESCRIPTION OF EMBODIMENTS**

The following describes in detail embodiments that specifically disclose a polymer, an electrode plate, and a battery cell, battery, and electric apparatus related thereto in this application. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject matter recorded in the claims.
"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combinations of real numbers between a and b, where both a and b are real numbers. For example, a value range of "0-5" means that all real numbers in the range of "0-5" are listed herein, and "0-5" is just an abbreviated representation of a combination of these numbers. In addition, when a parameter is expressed as an integer greater than or equal to 2, it is equivalent to disclosure that the parameter is, for example, an integer among 2, 3, 4, 5, 6, 7, 8, 9, 10, 11, 12, and so on.
Unless otherwise specified, all the embodiments and optional embodiments of this application can be combined with each other to form new technical solutions. Unless otherwise specified, all the technical features and optional technical features of this application can be combined with each other to form new technical solutions.
Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the above-mentioned method may further include step (c), which indicates that step (c) may be added to the method in any ordinal position, for example, the method may include steps (a), (b), and (c), steps (a), (c), and (b), steps (c), (a), and (b), or the like.
Unless otherwise specified, "include" and "contain" mentioned in this application are inclusive or may be exclusive. For example, "include" and "contain" can mean that other unlisted components may also be included or contained, or only listed components are included or contained.
Unless otherwise specified, in this application, the term "or" is inclusive. For example, the phrase "A or B" means "A, B, or both A and B". More specifically, any one of the following conditions satisfies the condition "A or B" : A is true (or present) and B is false (or not present); A is false (or not present) and B is true (or present); or both A and B are true (or present).
In this application, the term "a plurality of" means two or more than two, and the term "a plurality of types" means two types or more than two types.
The term "alkyl group" covers linear and branched alkyl groups. For example, the alkyl group may be a C1-C85 alkyl group, a C1-C5 alkyl group, a C1-C4 alkyl group, a C1-C3 alkyl group, or a C1-C2 alkyl group. In some embodiments, the alkyl group includes a methyl group, an ethyl group, a propyl group, an isopropyl group, a butyl group, an isobutyl group, and the like. In addition, the alkyl group may be arbitrarily substituted. When the alkyl group is substituted, a substituent

group includes a fluorine atom.

The term "alkoxy group" refers to a group in which an alkyl group is connected to an oxygen atom through a single bond. For example, the alkoxy group may be a C1-C5 alkoxy group, a C1-C3 alkoxy group, or a C1-C2 alkoxy group. In some embodiments, the alkoxy group may include a methoxy group, an ethoxy group, and a propoxy group. In addition, the alkoxy group may be arbitrarily substituted.

The term "hydroxyalkyl group" refers to a group in which a hydroxy group is connected to an alkyl group through a single bond. For example, the hydroxyalkyl group may be a C1-C8 hydroxyalkyl group, a C1-C5 hydroxyalkyl group, a C1-C3 hydroxyalkyl group, or a C1-C2 hydroxyalkyl group. In some embodiments, the hydroxyalkyl group may include a hydroxymethyl group, a hydroxyethyl group, a hydroxypropyl group, a hydroxybutyl group, and the like. In addition, the hydroxyalkyl group may be arbitrarily substituted.

The term "halogen atom" refers to a fluorine atom, a chlorine atom, a bromine atom, or the like.

The term "hydrogen" refers to 1H (protium, H), 2H (deuterium, D), or 3H (tritium, T). In various embodiments, "hydrogen" may be 1H (protium, H).

A battery cell includes a positive electrode plate, a negative electrode plate, and an electrolyte. There is a solid-liquid contact interface between an electrode plate and the electrolyte. Side reactions may occur at the contact interface, thereby deteriorating the performance of the battery cell. When the positive electrode plate is used as an example, there is a solid-liquid contact interface between a positive electrode active substance included in the positive electrode plate and the electrolyte. At this interface, the positive electrode active substance may undergo side reactions with the electrolyte, leading to the loss of the positive electrode active substance, and resulting in degradation in the cycling performance of the battery cell. In addition, the side reactions may produce products that are detrimental to the cycling of the battery cell, thereby deteriorating the storage performance of the battery cell.

In view of this, the embodiments of this application aim to improve the cycling performance and storage performance of the battery cell from the perspective of improving the interface performance of the solid-liquid contact interface. The embodiments of this application propose a polymer. When the polymer is applied to a positive electrode plate and/or a negative electrode plate, an in-situ gel can be formed on the surface of a solid-phase active substance. That is, a stable solid-liquid interface is formed on the surface of the active substance, reducing the risk of side reactions occurring at the solid-liquid interface, thereby improving the cycling performance and storage performance of the battery cell.

## Polymer

According to a first aspect, this application proposes a polymer. The polymer is applied to battery cells. The polymer includes an ester polymer. The ester polymer is made into a sheet structure. The sheet structure undergoes dynamic frequency scanning testing at ($T_m$+20)°C to obtain an elastic modulus G'-energy loss modulus G" curve, where a slope of the elastic modulus G'-energy loss modulus G" curve is K, $1<K<\infty$, and Tm°C represents a melting temperature of the ester polymer.

Specifically, a preparation process of the sheet structure is as follows: The polymer undergoes vacuum drying at 80°C for 12 h. The dried polymer is hot-pressed into a sheet using a flat vulcanizing machine, where a hot-pressing temperature is (Tm+20)°C, a calendering thickness is 1-2 min, a calendering time is 2 min, and a pressure is 8 MPa. After calendering for 2 min, a sample is taken out and placed on another vulcanizing machine of the same model for cold pressing, with a cold pressing pressure of 10 MPa. A circular mold with a diameter of 25 mm is used to obtain a polymer disc (sheet structure) with fixed dimensions. For example, the sheet structure may be a disc with a thickness of 1-2 mm and a diameter of 25 mm. Alternatively, the sample can be prepared according to the sample standard required by a testing device.

According to the conclusions of classical linear viscoelasticity, for a polymer, especially a linear polymer, if the slope of the elastic modulus G'-energy loss modulus G" curve is less than 1, a polymer melt exhibits a liquid-like behavior (liquid-like behavior), that is, there are fewer intermolecular entanglements, and chain segment movement is likely to occur under shear forces. If the slope is greater than 1, the polymer melt exhibits a solid-like behavior (liquid-like behavior), that is, there are more intermolecular entanglements, and chain segment movement is less likely to occur under shear forces.

Specific steps for dynamic frequency scanning testing are as follows: Dynamic frequency scanning testing is conducted using a TA-AR2000EX rotational rheometer (TAinstruments, USA), where a parallel plate has a diameter of 25 mm and a thickness of 0.9 mm. To ensure testing within a linear viscoelastic region, the strain during dynamic frequency scanning testing is 2%, a testing temperature is Tm+20°C, and a frequency scanning range for testing is 500 rad/s$\leq w^2 \leq$0.05 rad/s, so that data of a region with the lowest possible frequency can be obtained.

Dynamic frequency scanning testing can characterize a molecular chain entanglement degree in a solid-phase melting state (melt state). Compared with a linear structure or a short branched structure, a long branched structure, a network structure, or a low cross-linked structure has a higher entanglement degree, exhibiting a behavior deviating from a linear terminal; and the polymer exhibits a solid-phase behavior. When the polymer of this application meets the above

range, a molecular chain entanglement state can be further reduced, facilitating the diffusion of solvent molecules in an electrolyte between molecular chains. In addition, the polymer still maintains a certain molecular chain entanglement state, so that the solvent molecules can be locked in situ in the polymer, the risk of dissolution of the polymer in the electrolyte can be reduced, and the performance stability of the polymer can be improved. Furthermore, this helps the polymer to form a protective layer on the surface of an active substance, improving the solid-liquid interface performance, thereby reducing side reactions between the active substance and the electrolyte, and improving the cycling performance and storage performance of the battery cell.

In some embodiments, $1<K\leq 100$, optionally $1<K\leq 10$.

For example, K may be 1.01, 1.1, 1.2, 1.5, 2, 5, 10, 15, 20, 30, 50, 100, 200, 500, 1000, 5000, or 10000, or falls within a range defined by any two of the foregoing values.

In some embodiments, a glass transition temperature of the ester polymer is Tg, in °C, where $-100\leq Tg\leq 50$, optionally $-80\leq Tg\leq 30$.

The glass transition temperature is a transition temperature at which chain segments of the polymer change from a frozen state to a motion state. The glass transition temperature has a certain influence on the flexibility of the molecular chains of the polymer. A lower glass transition temperature leads to a higher flexibility of the molecular chains of the polymer at room temperature. A higher glass transition temperature leads to a lower flexibility of the molecular chains at room temperature. The glass transition temperature can be measured using differential scanning calorimetry DSC. Specifically, testing steps include: taking 0.5 g to 0.8 g of sample; placing the sample into a sample crucible; increasing and reducing the temperature of the sample under a nitrogen atmosphere in a manner of increasing the temperature at a temperature rise speed of 10°C/min from an initial temperature being 20°C lower than the intrinsic Tg of a material to a cutoff temperature of a process where the temperature is 20°C higher than the intrinsic Tm of the material; and determining an actual glass transition temperature Tg and melting temperature Tm of the material based on endothermic and exothermic peak values or transition points of the material during the process.

The glass transition temperature of the polymer is relatively low, the chain segment flexibility of the molecular chains is higher, and adjacent molecular chains are opened more easily. For example, the glass transition temperature of the ester polymer may be -100°C, -90°C, -80°C, -60°C, -30°C, 0°C, 30°C, or 50°C, or falls within a range defined by any two of the foregoing values.

In some embodiments, the ester polymer includes a structural unit shown in formula (I),

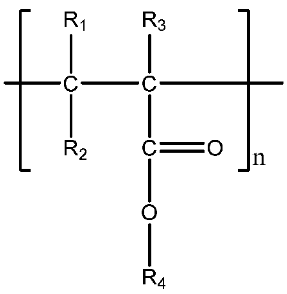

formula (I),

where in the formula (I), $R_1$, $R_2$, and $R_3$ each independently include a hydrogen atom or a substituted or unsubstituted C1-C8 alkyl group; and $R_4$ includes a substituted or unsubstituted C1-C8 alkyl group or a substituted or unsubstituted C1-C8 hydroxyalkyl group; and optionally, $R_4$ includes a substituted or unsubstituted C1-C6 alkyl group or a substituted or unsubstituted C1-C6 hydroxyalkyl group.

Optionally, $R_1$ includes a hydrogen atom or a substituted or unsubstituted methyl group; $R_2$ and $R_3$ each independently include a hydrogen atom; and $R_4$ includes a substituted or unsubstituted C1-C4 alkyl group or a substituted or unsubstituted C1-C4 hydroxyalkyl group.

For example, the ester polymer includes at least one of structural units shown in formula (I-1) to formula (I-15),

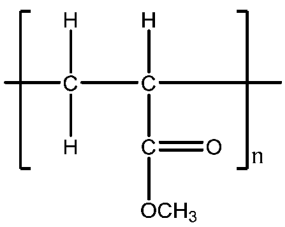

formula (I-1),

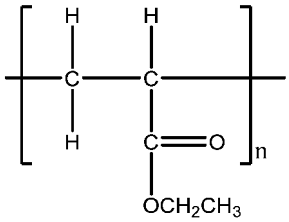

formula (I-2),

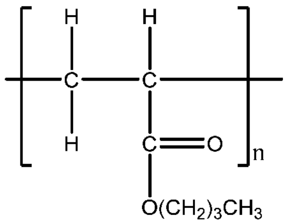

formula (I-3),

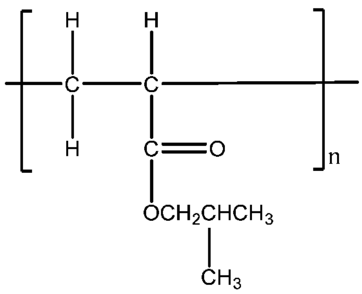

formula (I-4),

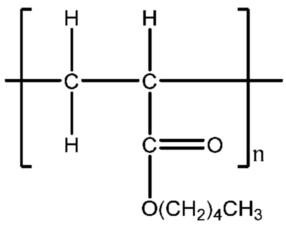

formula (I-5),

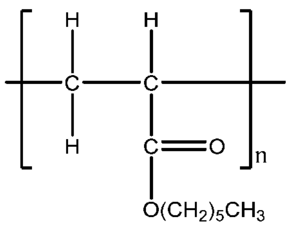

formula (I-6),

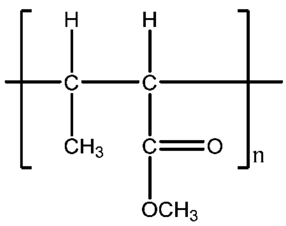

formula (I-7),

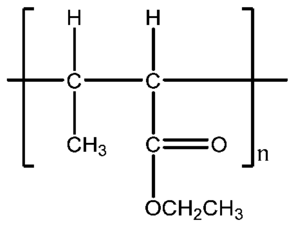

formula (I-8),

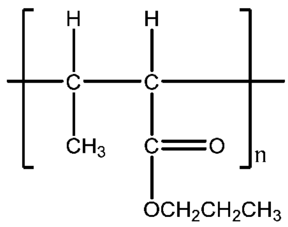

formula (I-9),

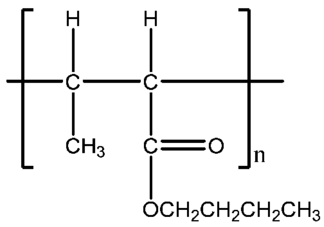

formula (I-10),

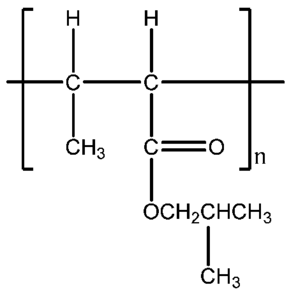

formula (I-11),

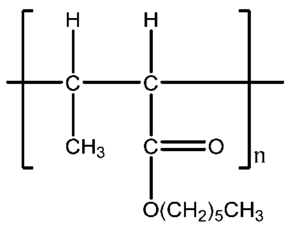

formula (I-12),

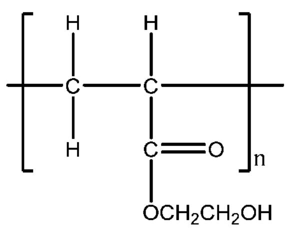

formula (I-13),

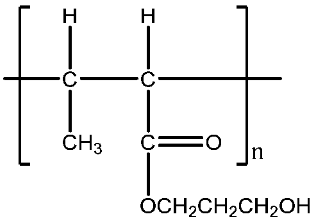

formula (I-14),

and

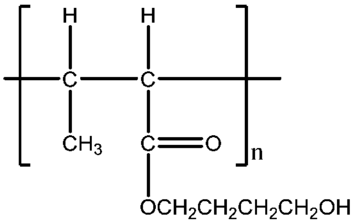

formula (I-15).

In some embodiments, the ester polymer includes a structural unit shown in formula (II),

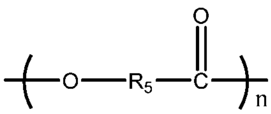

formula (II);

where in the formula (II), $R_5$ includes a substituted or unsubstituted C2-C6 methylene group; and optionally, $R_5$ independently includes a substituted or unsubstituted C2-C4 methylene group.

For example, the ester polymer includes at least one of structural units shown in formula (II-1) to formula (II-5),

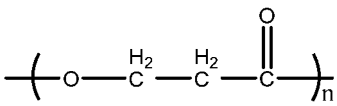

formula (II-1),

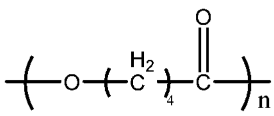

formula (II-2),

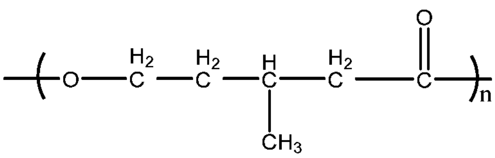

formula (II-3),

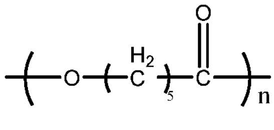

formula (II-4),

and

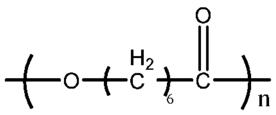

formula (II-5).

The ester polymer has a low molecular chain entanglement degree, helping to improve the flexibility of the molecular chains. The molecular chains can be fully extended in the electrolyte, so that the interface performance of the active substance can be further improved.

For example, the polymer includes only a structural group of a main molecular chain. In the embodiments of this application, the polymer can also be obtained by copolymerizing the structural group with other types of structural groups (for example, olefin structural units, acrylonitrile structural units, and maleic anhydride and other monomers with functional groups).

The groups of the polymer in this application can be detected using infrared spectroscopy IR. Specifically, the polymer is tested using a ThermoNicoletNexus670 attenuated total reflectance Fourier transform infrared spectrometer (FTIR-ATR), and then tested according to the standard GB/T6040-2002, with a testing range of 600-4000 $cm^{-1}$ in an ATR method, a repeatability of $\pm 2$ $cm^{-1}$, a resolution of higher than 4 $cm^{-1}$, and a transmission depth of 0.2-0.6 $\mu$m.

The structure of the polymer in this application can be tested using nuclear magnetic resonance NMR. Specifically, 1HNMR and 13CNMR are performed on a VarianMercuryPlus-400 nuclear magnetic resonance spectrometer, where a testing temperature is 20°C, TMS is an internal standard, $CDCl_3$ is used as a solvent, and a proton resonance frequency is 400 MHz.

Types of monomers of the polymer in this application (especially suitable for monomers that account for a small proportion in the polymer) can be tested using pyrolysis-gas chromatography-mass spectrometry. Specific testing steps include: accurately weighing 0.5 mg of sample and placing the sample into a sample cup; fixing the sample cup on a sample injection rod, and placing the sample injection rod into a pyrolyzer installed near a GC (gas chromatography) sample injection port; pressing a sample injection button after a temperature of the pyrolyzer reaches a given temperature and allowing the sample cup to quickly drop into the center of the pyrolyzer by free fall; allowing volatile constituents to instantly vaporize in an inert gas atmosphere of $N_2$, and carrying the vaporized constituents into a gas chromatography column by a carrier gas for separation; and ultimately detecting the resulting product using a flame ionization detector FID or a mass spectrometer MS to obtain a gas chromatogram or a total ion chromatogram.

When the foregoing groups are substituted, substituent groups may include one or more of a nitrile group, a nitryl group, a sulfonyl group, a carboxyl group, an ester group, a chlorine atom, a fluorine atom, and a bromine atom. The substituent groups are high-pressure-resistant substituent groups, which is more conducive to stabilizing the structure of the polymer.

In some embodiments, n is selected from positive integers from 800 to 20000.

Optionally, n is selected from positive integers from 1000 to 15000.

In some embodiments, a molecular weight of the polymer is $1.2\times10^5$ g/mol to $1.0\times10^6$ g/mol.

The molecular weight of the polymer falling within the above range can ensure that the polymer exhibits a certain solubility in the electrolyte and is not easily dissolved and dispersed fully in the electrolyte, helping to control the distribution and dispersion of the polymer on the surface of the active substance. In addition, the flexibility between the molecular chains of the polymer can be further improved, and action forces between the molecular chains are relatively weak. This helps the solvent molecules in the electrolyte to open the molecular chains, enter the molecular chains, and be encapsulated by the molecular chains. Thus, this helps active ions to enter the active substance through a solvent, implementing smooth and rapid migration of the active ions. For example, the molecular weight of the polymer may be $1.2\times10^5$ g/mol, $2\times10^5$ g/mol, $5\times10^5$ g/mol, $8\times10^5$ g/mol, $1\times10^6$ g/mol, or $1.5\times10^6$ g/mol, or falls within a range defined by any two of the foregoing values.

The molecular weight of the polymer has a well-known meaning in the art, can be measured using commonly used devices and methods in the art, and can be tested using gel permeation chromatography GPC. Specific testing steps include: taking an appropriate amount of a sample under test (provided that a sample concentration guarantees an opacity of 8% to 12%); adding 20 ml deionized water, and externally sonicating for 5 min (53 KHz/120 W) to ensure that the sample is fully dispersed; and then measuring the sample according to the GB/T19077-2016/ISO13320:2009 standard.

Alternatively, a multi-angle laser light scatterer MALLS can be used for testing. Specifically, an instrument (WyattTechnologyCorporation, USA) is used, where a GPC, a DawnHeleos II multi-angle laser light scattering apparatus, an OptilabT-rEX refractive index (RI) detector, and a ViscoStar II viscometer are used in combination. Testing is conducted at 30°. Tetrahydrofuran is used as a mobile phase for testing at a flow rate of 1.0 ml/min. Commercial software ASTRA6 is used to process SEC-SAMLL data to obtain molecular weight parameters.

When the polymer in the embodiments of this application meets one or more of the following conditions, the cycling performance and storage performance of the battery cell can be further improved.

In some embodiments, the polymer is added into a first solvent at 45°C to form a polymer system; the polymer

system is left standing at 45°C for 8 h; and after left standing at 25°C for 24 h or more, the polymer system undergoes two stages of left standing treatment; and then part of the polymer system is transformed in situ into a gel-state substance, and then the polymer system is filtered through a 200-mesh filter to obtain a residual first substance. A mass of the polymer is n, in g; a mass of the first substance is m, in g; and the polymer and the first substance satisfy: 5≤m/n≤1000; optionally, 10≤m/n≤1000; and further optionally, 10≤m/n≤50. For example, the value of m/n may be 5, 10, 20, 25, 28, 30, 32, 35, 40, 50, 80, 100, 200, 500, or 1000, or falls within a range defined by any two of the foregoing values.

For example, based on a mass of the polymer system, a ratio of a mass percentage of the polymer to a mass percentage of the first solvent ranges from 1:100 to 1:10, for example, 3:50.

For example, the first solvent is the same or similar to the solvent of the electrolyte, and the first solvent may include a carbonate solvent. For example, the carbonate solvent includes a cyclic carbonate solvent and/or a linear carbonate solvent.

As an example of the cyclic carbonate solvent, the cyclic carbonate solvent includes one or more of ethylene carbonate EC, vinylene carbonate VC, fluoroethylene carbonate FEC, difluoroethylene carbonate DFEC, vinyl ethylene carbonate VEC, and dicaprylyl carbonate CC.

As an example of the linear carbonate solvent, the linear carbonate solvent includes one or more of dimethyl carbonate DMC, diethyl carbonate DEC, ethyl methyl carbonate EMC, diphenyl carbonate DPC, methyl allyl carbonate MAC, and polycarbonate VA.

Optionally, the first solvent may further contain lithium salts and electrolyte additives, such as lithium hexafluorophosphate, vinylene carbonate VC, and fluoroethylene carbonate FEC.

In this application, the value of m/n is also referred to as a precipitation value, which characterizes the capabilities of the polymer and solvent in being transformed into gel-state substances.

The first substance mainly includes the gel-state substance formed by the polymer and the first solvent, and a molecular structure of the polymer in such gel-state substance basically has no change.

In some embodiments, the first substance is dried at 80°C for 12 h to remove the first solvent from the first substance, and then detected using infrared spectroscopy IR or tested using nuclear magnetic resonance NMR. After dried, a main constituent of the first substance is the polymer as described above.

This application can achieve the extension of the molecular chains of the polymer in a safe working temperature range of the battery cell by increasing the temperature, thereby facilitating the mutual attraction and physical bonding between the molecular chains of the polymer and the solvent. At room temperature, the activity of polymer molecular chain segments decreases, so that the polymer remains adhered to the surface of the active substance, the electrolyte is locked in a spatial environment where the polymer is located, and a state similar to in-situ gel is formed. This maintains normal transmission of lithium ions while protecting an active substance interface, thereby establishing interface protection, reducing surface side reactions, and improving the cycling performance and storage performance.

## Positive electrode plate

According to a second aspect, this application proposes a positive electrode plate. The positive electrode plate includes a positive electrode current collector and a positive electrode active substance layer disposed on the positive electrode current collector. The positive electrode active substance layer includes a positive electrode active substance and a polymer. The polymer includes the polymer according to any one of the embodiments of the first aspect of this application.

For example, the positive electrode current collector has two opposite surfaces in its thickness direction, and the positive electrode active substance layer is disposed on either or both of the two opposite surfaces of the positive electrode current collector.

An electrode plate can be prepared by applying a slurry on a current collector, followed by drying and cold pressing. Alternatively, the electrode plate is obtained from a battery cell. The battery cell is disassembled, and then an electrode plate soaked in an electrolyte of the battery cell is taken out. The electrode plate soaked in the electrolyte undergoes vacuum drying at 100°C for 12 h to obtain the electrode plate which is used for electrode plate tests such as an electrolyte absorption velocity.

The polymer can be synthesized in a method such as emulsion polymerization, suspension polymerization, bulk polymerization, or solution polymerization. Alternatively, the polymer is obtained from a battery cell. The battery cell is disassembled, and an electrode plate soaked in an electrolyte of the battery cell is taken out. An active substance of the obtained electrode plate is stripped from a current collector through an external force to form a powder sample. The powder sample is added into DMC. Then, the mixture is stirred at 80°C for 8 h at 500 rpm. After stirred, the mixture is left standing for 10 min at room temperature. The supernatant is taken and then dried at 80°C for 12 h to obtain the polymer. The obtained polymer may contain a small amount of lithium salt, but this basically has no influence on infrared testing and precipitation value testing. To ensure the accuracy of the polymer, the lithium salt can be further separated by rinsing with DMC at room temperature.

In some embodiments, the positive electrode active substance layer satisfies:

$$\lambda = 1 - \frac{P_1}{P_2} \qquad \text{formula (1);}$$

$$v = \pi \times \left(\frac{d}{2}\right)^2 \times h \times \frac{\rho}{t} \qquad \text{formula (2);}$$

and

$$v/\lambda > 1.00 \qquad \text{formula (3);}$$

where

in formulas (1) to (3),
λ represents a porosity of the positive electrode active substance layer;
$P_1$ represents an actual compacted density of the positive electrode active substance layer, in g/cm$^3$;
$P_2$ represents a true compacted density of the positive electrode active substance, in g/cm$^3$;
v represents an electrolyte absorption velocity of the positive electrode active substance layer, in mg/s;
d represents a diameter of a capillary tube in a capillary test for the positive electrode active substance layer, in mm;
h represents an electrolyte level in the capillary tube, in mm;
ρ represents a density of the electrolyte in the capillary test, in g/cm$^3$; and
t represents a time taken for the electrolyte in the capillary tube to be absorbed, in s.

In this application, the actual compacted density $P_1$ refers to a ratio of a mass to a thickness of the positive electrode active substance layer per unit area of the electrode plate. The actual compacted density is determined by a force applied to the electrode plate when the electrode plate is rolled after coated, in g/cm$^3$. Specific testing steps include: taking an electrode plate with a specified area S, weighing a mass M of the positive electrode active substance layer, and measuring a thickness D of the positive electrode active substance layer. The actual compacted density is equal to M/(S×D).

In this application, the true compacted density $P_2$ refers to a density of the positive electrode active substance in the positive electrode active substance layer. Specifically, the true compacted density $P_2$ refers to a mass per unit "an actual volume of a solid substance (excluding open pores, closed pores, and inter-particle pores)" in a dense state. The true volume V is obtained through testing, and the true compacted density is calculated according to P=m/V. Testing can be conducted according to GB/T24586-2009. Specifically, testing steps are described below.

(1) Pretreatment: A clean and dry sample cup is placed on a balance; the balance is reset; the powder sample is added into the sample cup, where a volume of the powder sample accounts for approximately half of a volume of the sample cup; and a mass of the sample is recorded.
(2) The sample cup filled with the sample is placed into a true density tester, and a testing system is turned off; then the helium gas is introduced according to the procedure; and a pressure of gas in a sample chamber and an expansion chamber is detected, and then a true volume is calculated using the Boyle's law (PV=nRT), so that the true compacted density is calculated.

The volume of the sample cup is 3.5 cm$^3$; and an analysis gas is the helium gas.

In formula (1), the porosity λ of the active substance layer can be calculated through the actual compacted density and the true compacted density.

Specifically, $\lambda = \frac{V1-V2}{V1} = 1 - \frac{V2}{V1} = 1 - \frac{m/V1}{m/V2} = 1 - \frac{P_1}{P_2}$,

where V1 represents a volume of the positive electrode active substance layer under a mass m, in cm$^3$;
V2 represents a volume of active particles in the positive electrode active substance layer under the mass m, in cm$^3$; and
m represents the mass of the positive electrode active substance layer, in g.

Formula (2) can characterize a speed at which one point of the electrode plate almost fully absorbs the liquid (for

example, the electrolyte) in the capillary tube per unit time. In this application, one point of the electrode plate refers to a region with a specified area in the electrode plate, and the area corresponds to a cross-sectional area of the capillary tube.

In this application, a method for detecting the electrolyte absorption velocity of the electrode plate includes the following steps:

using a capillary tube to absorb a predetermined amount of electrolyte;
enabling the capillary tube to be in contact with the electrode plate, and enabling the electrode plate under test to absorb the electrolyte in the capillary tube under the capillary action; and
recording an electrolyte level h of the absorbed electrolyte in the capillary tube after a predetermined duration t, calculating the amount of the absorbed electrolyte based on the electrolyte level h and diameter d of the capillary tube as well as a density ρ of the electrolyte, and quantitatively calculating the electrolyte absorption velocity v of the electrode plate based on a ratio of the amount of the absorbed electrolyte to the predetermined duration t.

For example, the value of d is 0.2 to 1, such as 0.2; and the value of h is 3 to 5, such as 3.

The capillary tube has capillary channels so that the capillary tube can directly absorb the electrolyte through the capillary action, without needing an external driving unit to provide electrolyte absorption power. Thus, on one hand, during electrolyte absorption through the capillary action, an absorption amount can be more precisely controlled. On the other hand, because the electrode plate absorbs the electrolyte through its own capillary action, when the capillary tube is in contact with the electrode plate under test, the electrode plate absorbs the electrolyte from the capillary tube. When the contact is removed, the electrolyte in the capillary tube no longer flows out, so the amount of the absorbed electrolyte in the capillary tube can precisely reflect the corresponding volume of the electrolyte absorbed by the electrode plate, thereby further improving the accuracy of testing results and achieving quantitative calculation of the electrolyte absorption velocity of the electrode plate.

In this application, a standard electrolyte is used as a test sample for testing, and a specific formulation of the electrolyte may refer to electrolyte formulations in examples.

Formula (3) represents the electrolyte absorption velocity of the electrode plate with the porosity λ and can be used to characterize the electrolyte absorption speed of the electrode plate.

The polymer of this application is introduced during preparation of the active substance layer, and can form uniform high-infiltration points in the active substance layer and uniformly enhance the infiltration performance of the active substance layer, thereby increasing the overall electrolyte absorption speed of the active substance layer, and improving the cycling performance of the battery cell using the electrode plate.

Optionally, $1.00<v/\lambda<50.00$.

In some embodiments, $1.00<v/k<4.00$; optionally, $1.20<v/k<3.80$; and further optionally, $1.4<v/k<3.6$. For example, the value of $v/\lambda$ may be 1.20, 1.40, 1.80, 2.00, 2.50, 3.00, 3.50, 3.60, 3.80, or 3.90, or falls within a range defined by any two of the foregoing values.

In some embodiments, based on the mass of the positive electrode active substance layer, a mass percentage of the polymer is A%, where $0.1<A<1.5$.

When the mass percentage of the polymer falls within the above range, the interface performance of the positive electrode active substance layer can be significantly improved. For example, the mass percentage of the polymer may be 0.1%, 0.2%, 0.5%, 0.8%, 1.0%, 1.2%, or 1.5%, or falls within a range defined by any two of the foregoing values.

The positive electrode active substance layer includes a positive electrode active substance. The positive electrode active substance may be a positive electrode active substance for battery cells well known in the art. For example, the positive electrode active substance may include at least one of the following materials: a layered positive electrode active substance (for example, a ternary, lithium nickel oxide/sodium, lithium cobalt oxide/sodium, lithium manganese oxide/sodium, lithium-rich/sodium layered material, or a rock salt phase layered material), an olivine-type phosphate active substance, and a spinel-structured positive electrode active substance (for example, spinel lithium manganese oxide, spinel lithium nickel manganese oxide, lithium-rich spinel lithium manganese oxide, or lithium nickel manganese oxide).

For example, the general formula of the layered positive electrode active substance is as follows: $Li_xA_yNi_aCo_bMn_cM_{(1-a-b-c)}Y_z$, where $0\leq x\leq 2.1$, $0\leq y\leq 2.1$, and $0.9\leq x+y\leq 2.1$; $0\leq a\leq 1$, $0\leq b\leq 1$, $0\leq c\leq 1$, and $0.1\leq a+b+c\leq 1$; $1.8\leq z\leq 3.5$; A is selected from one or more of Na, K, and Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Optionally, y=0. Specifically, the layered positive electrode active substance may include one or more of lithium cobalt oxide LCO, lithium nickel oxide LNO, lithium manganese oxide LMO, $LiNi_{1/3}Co_{1/3}Mn_{1/3}O_2$ (NCM333), $LiNi_{0.8}Co_{0.1}Mn_{0.1}O_2$ (NCM811), and $LiNi_{0.5}Co_{0.2}Mn_{0.3}O_2$ (NCM523).

For example, the general formula of the olivine-type phosphate active substance is as follows: $Li_xA_yMe_aM_bP_{1-c}X_cY_z$, where $0\leq x\leq 1.3$, $0\leq y\leq 1.3$, and $0.9\leq x+y\leq 1.3$; $0.9\leq a\leq 1.5$, $0\leq b\leq 0.5$, and $0.9\leq a+b\leq 1.5$; $0\leq c\leq 0.5$; $3\leq z\leq 5$; A is selected from one or more of Na, K, and Mg; Me is selected from one or more of Mn, Fe, Co, and Ni; M is selected from one or more of

B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from one or more of S, Si, Cl, B, C, and N; and Y is selected from one or more of O and F. Specifically, the olivine-type phosphate active substance includes one or more of $LiFePO_4$, $LiMnPO_4$, $LiNiPO_4$, and $LiCoPO_4$.

For example, the general formula of the spinel-structured positive electrode active substance is as follows: $Li_xA_yMn_aM_{2-a}Y_z$, where $0\leq x\leq 2$, $0\leq y\leq 1$, and $0.9\leq x+y\leq 2$; $0.5\leq a\leq 2$; $3\leq z\leq 5$; A is selected from one or more of Na, K, and Mg; M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Specifically, the spinel-structured positive electrode active substance includes one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$, and $Li_{1.5}Mn_2O_4$.

In some embodiments, the positive electrode current collector may be a metal foil or a composite current collector. For example, an aluminum foil or an aluminum alloy foil may be used as the metal foil. The composite current collector may include a polymer material matrix and a metal material layer formed on at least one surface of the polymer material matrix. For example, the metal material may include one or a combination of several selected from aluminum, aluminum alloy, nickel, nickel alloy, titanium, titanium alloy, silver, and silver alloy. The polymer material matrix may include one or a combination of several selected from polypropylene (PP), polyethylene terephthalate (PET), polybutylene terephthalate (PBT), polystyrene (PS), and polyethylene (PE).

In some embodiments, the positive electrode active substance layer further optionally includes a positive electrode conductive agent. The positive electrode conductive agent is not limited to any particular type in this application. For example, the positive electrode conductive agent includes one or a combination of several selected from superconducting carbon, conductive carbon black, conductive graphite, acetylene black, carbon black, Ketjen black, carbon dots, carbon nanotubes, graphene, and carbon nanofiber. In some embodiments, based on a total mass of the positive electrode active substance layer, a mass percentage of the positive electrode conductive agent is 5% or below.

In some embodiments, the positive electrode active substance layer further optionally includes a positive electrode binder. The positive electrode binder is not limited to any particularly type in this application. For example, the positive electrode binder may include one or a combination of several selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, based on the total mass of the positive electrode active substance layer, a mass percentage of the positive electrode binder is 5% or below. Compared with the crystallinity of the ester polymer in this application, the crystallinity of the positive electrode binder is higher. Compared with the melting temperature of the ester polymer in this application, the melting temperature of the positive electrode binder is higher.

The positive electrode active substance layer is typically formed by applying a positive electrode slurry on the positive electrode current collector, followed by drying and cold pressing. The positive electrode slurry is typically formed by dispersing the positive electrode active substance, the optional conductive agent, the optional binder, and any other components into a solvent and stirring them until the mixture is uniform. The solvent may be but is not limited to N-methylpyrrolidone (NMP).

**Negative electrode plate**

According to a third aspect, this application proposes a negative electrode plate including a negative electrode current collector and a negative electrode active substance layer disposed on the negative electrode current collector. The negative electrode active substance layer includes a negative electrode active substance and a polymer. The polymer includes the polymer according to any one of the embodiments of the first aspect of this application.

For example, the negative electrode current collector includes two opposite surfaces in its thickness direction, and the negative electrode active substance layer is disposed on either or both of the two opposite surfaces of the negative electrode current collector.

In some embodiments, the negative electrode active substance layer satisfies:

$$v/\lambda>1.00 \qquad \text{formula (4)},$$

where

in formula (4),
$\lambda$ represents a porosity of the negative electrode active substance layer; and
v represents an electrolyte absorption velocity of the negative electrode active substance layer, in mg/s.

Detection methods of $\lambda$ and v are described as those of the positive electrode active substance layer. Details are

not described herein again.

In some embodiments, $3.00<v/\lambda<50.00$, optionally $3.40\leq v/\lambda\leq 30.00$. For example, the value of $v/\lambda$ may be 3.20, 3.40, 3.50, 4.00, 4.50, 5.00, 5.50, 6.00, 6.50, 7.00, 8.00, 9.00, 9.50, 10.00, 10.50, 11.00, 12.00, 13.00, or 14.00, or falls within a range defined by any two of the foregoing values.

In some embodiments, based on a mass of the negative electrode active substance layer, a mass percentage of the polymer is B%, where $0.2\leq B\leq 5.0$.

When the mass percentage of the polymer falls within the above range, the interface performance of the negative electrode active substance layer can be significantly improved. For example, the mass percentage of the polymer may be 0.2%, 0.5%, 0.8%, 1.0%, 1.2%, 1.5%, 2.0%, 2.5%, 3.0%, 3.5%, 4.0%, 4.5%, or 5.0%, or falls within a range defined by any two of the foregoing values.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active substance may be a negative electrode active substance for batteries well known in the art. For example, the negative electrode active substance may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active substances for batteries instead. One of these negative electrode active substances may be used alone, or two or more of them may be used in combination.

In some embodiments, the negative electrode active substance layer further optionally includes a negative electrode binder. The negative electrode binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active substance layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode active substance layer further optionally includes other additives such as a thickener (for example, sodium carboxymethyl cellulose (CMC-Na)).

In some embodiments, the negative electrode plate may be prepared in the following manner: the foregoing components used for preparing the negative electrode plate, for example, the negative electrode active substance, the polymer, the conductive agent, the binder, and any other components, are dispersed in a solvent (for example, deionized water) to form a negative electrode slurry; and the negative electrode slurry is applied on the negative electrode current collector, followed by processes such as drying and cold pressing to obtain the negative electrode plate.

## Battery cell

According to a fourth aspect, this application provides a battery cell. The battery cell includes a positive electrode plate, a negative electrode plate, a separator disposed between the positive electrode plate and the negative electrode plate, and an electrolyte. The battery cell is a lithium-ion battery.

In some embodiments, the positive electrode plate may be the positive electrode plate according to any one of the embodiments of the second aspect of this application. Thus, the cycling performance and storage performance of the battery cell can be improved. The negative electrode plate may be a conventional negative electrode plate.

In some other embodiments, the negative electrode plate may be the negative electrode plate according to any one of the embodiments of the third aspect of this application. Thus, the cycling performance and storage performance of the battery cell can be improved. The positive electrode plate may be a conventional positive electrode plate.

In still some other embodiments, the positive electrode plate may be the positive electrode plate according to any one of the embodiments of the second aspect of this application. The negative electrode plate may be the negative electrode plate according to any one of the embodiments of the third aspect of this application. Thus, the cycling performance and storage performance of the battery cell can be improved.

[Electrolyte]

The battery cell further includes an electrolyte. The electrolyte conducts ions between the positive electrode plate and the negative electrode plate. The electrolyte is not limited to any specific type in this application and may be selected based on needs. For example, the electrolyte may be in a liquid state, a gel state, or an all-solid-state.

In some embodiments, the electrolyte is a liquid electrolyte. The liquid electrolyte includes an electrolytic salt and a solvent.

For example, a lithium salt may include one or a combination of several selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro(dioxalato)phosphate (LiDFOP), and lithium tetrafluoro(oxalato)phosphate (LiTFOP).

For example, an organic solvent may include one or a combination of several selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), methyl ethyl sulfone (EMS), and diethyl sulfone (ESE).

In some embodiments, the liquid electrolyte further optionally includes an additive. For example, the additive may include a negative electrode film-forming additive and a positive electrode film-forming additive, or may further include an additive capable of improving some performance of the battery, for example, an additive for improving overcharge performance of the battery, and an additive for improving high-temperature performance or low-temperature performance of the battery.

[Separator]

In some embodiments, the battery cell further includes a separator. The separator is not limited to any particular type in this application, and may be any well-known porous separator with good chemical stability and mechanical stability.

In some embodiments, a material of the separator may include one or a combination of several selected from glass fiber, non-woven fabrics, polyethylene, polypropylene, and poly(vinylidene difluoride). The separator may be a single-layer film or a multi-layer composite film. When the separator is a multi-layer composite film, all layers may be made of the same or different materials.

In some embodiments, the positive electrode plate, the separator, and the negative electrode plate may be made into an electrode assembly through winding or stacking.

The battery cell is not limited to any particular shape in this application and may be cylindrical, rectangular, or of any other shapes. FIG. 1 shows a battery cell 5 with a rectangular structure as an example.

In some embodiments, as shown in FIGs. 1 and 2, an outer package may include a housing 51 and a cover plate 53. The housing 51 may include a base plate and side plates connected onto the base plate, where the base plate and the side plates enclose an accommodating cavity. The housing 51 has an opening in communication with the accommodating cavity, and the cover plate 53 is configured to cover the opening to seal the accommodating cavity. A positive electrode plate, a negative electrode plate, and a separator may be made into an electrode assembly 52 through winding or stacking. The electrode assembly 52 is packaged in the accommodating cavity. An electrolyte infiltrates into the electrode assembly 52. There may be one or more electrode assemblies 52 in the battery cell 5, and the quantity may be adjusted as required.

The preparation method of the battery cell in this application is well-known. In some embodiments, the positive electrode plate, the separator, the negative electrode plate, and the electrolyte may be assembled to form a battery cell. For example, the positive electrode plate, the separator, and the negative electrode plate may be made into an electrode assembly through winding or stacking; and the electrode assembly is placed into the outer package, and electrolyte injection is performed after drying, followed by processes such as vacuum packaging, standing, formation, and shaping, to obtain a battery cell.

In some embodiments of this application, the battery cell in this application may be assembled into a battery module. The battery module may include a plurality of battery cells, and a specific quantity may be adjusted based on application and capacity of the battery module.

FIG. 3 is a schematic diagram of a battery module 4 as an example. As shown in FIG. 3, in the battery module 4, a plurality of battery cells 5 may be sequentially arranged in a length direction of the battery module 4. Certainly, the battery cells may alternatively be arranged in any other manners. Further, the plurality of battery cells 5 may be fastened through fasteners.

Optionally, the battery module 4 may further include an enclosure with an accommodating space, and the plurality of battery cells 5 are accommodated in the accommodating space.

In some embodiments, the battery module may be further assembled into a battery pack, and a quantity of battery modules included in the battery pack may be adjusted based on application and capacity of the battery pack.

The battery module 4 and the battery pack may both be specific examples of the battery of this application.

FIGs. 4 and 5 are schematic diagrams of a battery pack 1 as an example. As shown in FIGs. 4 and 5, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

## Electric apparatus

According to a fifth aspect, this application provides an electric apparatus. The electric apparatus includes at least one of the battery cell, the battery module, and the battery pack in this application. The battery cell, the battery module, and the battery pack may each be used as a power source of the electric apparatus or an energy storage unit of the electric apparatus. The electric apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, and an energy storage system.

The battery cell, the battery module, or the battery pack may be selected for the electric apparatus according to requirements for using the electric apparatus. FIG. 6 is schematic diagram of an electric apparatus as an example. This electric apparatus 6 is a battery electric vehicle, a hybrid electric vehicle, a plug-in hybrid electric vehicle, or the like. To satisfy requirements of the electric apparatus for high power and high energy density, the battery pack 1 or the battery module may be used. In another example, the electric apparatus may be a mobile phone, a tablet computer, a laptop computer, or the like. The electric apparatus is typically required to be light and thin and may use a battery cell as its power source.

## Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

(1) Preparation of positive electrode plate

An aluminum foil with a thickness of 12 μm was used as a positive electrode current collector.

An ester polymer, positive electrode active substance $LiFePO_4$, conductive agent carbon black, a binder such as poly(vinylidene difluoride), and N-methylpyrrolidone (NMP) were prepared into a positive electrode slurry. A mass ratio of the ester polymer, $LiFePO_4$, the conductive carbon black, PVDF, and N-methylpyrrolidone (NMP) in the positive electrode slurry was 0.5:96.8:2:0.7:29. The positive electrode slurry was applied on the current collector aluminum foil. After drying at 85°C, cold pressing was performed. Then, after trimming, cutting, and slitting, vacuum drying was performed at 85°C for 4 h to obtain a positive electrode plate.

(2) Preparation of negative electrode plate

A copper foil with a thickness of 8 μm was used as a negative electrode current collector.

An ester polymer, negative electrode active substance artificial graphite, conductive agent carbon black, binder styrene-butadiene rubber (SBR), thickener sodium carboxymethyl cellulose (CMC), and deionized water were mixed well at a weight ratio of 2.5:94:0.5:2:1:100 to obtain a negative electrode slurry. The negative electrode slurry was applied on the current collector copper foil. After drying at 85°C, cold pressing, trimming, cutting, and slitting were performed. Then, vacuum drying was performed at 120°C for 12 h to obtain a negative electrode plate.

(3) Preparation of electrolyte

In an environment with a water content less than 10 ppm, non-aqueous organic solvents ethylene carbonate EC

and ethyl methyl carbonate (EMC) were mixed at a volume ratio of 3:7 to obtain an electrolyte solvent. Then, a lithium salt $LiPF_6$ was mixed with the mixed solvent to prepare an electrolyte with a lithium salt concentration of 1 mol/L.

(4) Preparation of lithium-ion battery

A polyethylene film (PE) with a thickness of 16 μm was used as a separator. The positive electrode plate, the separator, and the negative electrode plate were sequentially stacked so that the separator was located between the positive electrode plate and the negative electrode plate for separation. Then, the resulting stack was wound to obtain an electrode assembly. The electrode assembly was placed into an outer package shell. After drying, electrolyte injection was performed, and processes such as vacuum packaging, standing, formation, and shaping were performed to obtain a lithium-ion battery.

**Comparative example 1**

A lithium-ion battery was prepared using a method similar to that in Example 1. Comparative example 1 differed from Example 1 in that no ester polymer was added into a positive electrode plate in Comparative example 1, and no ester polymer was added into a negative electrode plate in Comparative example 1.

**Comparative example 2**

A lithium-ion battery was prepared using a method similar to that in Example 1. Comparative example 2 differed from Example 1 in that materials of ester polymers in a positive electrode plate and negative electrode plate in Comparative example 2 were changed.

**Examples 2 to 4**

Lithium-ion batteries were prepared using a method similar to that in Example 1. Examples 2 to 4 differed from Example 1 in that materials of ester polymers in positive electrode plates and negative electrode plates in Examples 2 to 4 were changed.

**Example 5**

A lithium-ion battery was prepared using a method similar to that in Example 1. Example 5 differed from Example 1 in that an ester polymer was added into a positive electrode plate in Example 5, and no ester polymer was added into a negative electrode plate in Example 5.

**Example 6**

A lithium-ion battery was prepared using a method similar to that in Example 1. Example 6 differed from Example 1 in that an ester polymer was added into a negative electrode plate in Example 6, and no ester polymer was added into a positive electrode plate in Example 6.

**Data of examples and comparative examples are shown in Table 1.**

**Tests**

1. Capacity retention rate test of lithium-ion battery

The lithium-ion battery prepared in each of the examples and comparative examples was charged to 4.25 V at a constant current of 1/3C at room temperature, then charged to a current of 0.05C at a constant voltage of 4.25 V, left standing for 5 min, and then discharged to 2.8 V at 1/3C. A capacity obtained was recorded as an initial capacity C0. Then, the battery was adjusted to a state of 97% soc and stored in an environment at 60°C. The above steps were repeated on the same battery, and a discharge capacity Cn of the battery every 30 D was recorded, so that a battery capacity retention rate Pn after every 30 D was equal to Cn/C0×100%. A scatter plot of battery capacity retention rates versus storage days was obtained by plotting values of 5 points P1, P2, ..., and P5 as the vertical axis and plotting the corresponding storage times as the horizontal axis. Battery capacity retention rate data in Table 1 was data measured after storage for 150 D under the above test conditions, that is, the value of P5.

2. Direct-current resistance test of lithium-ion battery

The lithium-ion battery prepared in each of the examples and comparative examples was charged to 4.25 V at a constant current of 1/3C at 25°C, then charged to a current of 0.05C at a constant voltage of 4.25 V, and left standing for 5 min. Then, a voltage V1 was recorded. Then, the battery was discharged at 1/3C for 30s, and a voltage V2 was recorded. An internal resistance DCR1 of the battery after the first cycle was obtained by calculation through (V2-V1)/1/3C. The battery was charged to 4.25 V at a constant current of 1/3C at room temperature, then charged to a current of 0.05C at a constant voltage of 4.25 V, left standing for 5 min, and then discharged to 2.8 V at 1/3C. A capacity obtained was recorded as an initial capacity C0. Then, the battery was adjusted to a state of 97% soc and stored in an environment at 60°C. The above steps were repeated on the same battery every 30 D, and an internal resistance DCRn (n=1, 2, 3, ..., and 5) of the battery at the n-th cycle. A curve graph of battery discharge DCIR over storage days was obtained by plotting values of 5 points DCR1, DCR2, DCR3, ..., and DCR5 as the vertical axis and plotting the corresponding number of cycles as the horizontal axis.

A battery internal resistance increase ratio in Table 1 was equal to (DCRn-DCR1)/DCR1×100%. Data in Table 1 was data measured after storage for 150 D under the above test conditions.

**Test results**

**Table 1**

| Item | Ester polymer | | | | | | | Positive electrode plate | Negative electrode plate | Lithium-ion battery | |
|---|---|---|---|---|---|---|---|---|---|---|---|
| | Monomer 1 | Monomer 2 | Monomer 3 | Glass transition temperature Tg (°C) | Molecular weight (g/mol) | Precipitation value m/n | K | Containing ester polymer | Containing ester polymer | Capacity retention rate (%) | DCIR (%) |
| Comparative example 1 | / | / | / | / | / | / | / | No | No | 91.0% | 20% |
| Comparative example 2 | 100% Methyl methacrylate | / | / | 100 | 500,000 | 0 | 2.0 | Yes | Yes | 91.5% | 19% |
| Example 1 | 85% Vinyl acetate | 15% ethylene | / | 0 | 180,000 | 25 | 1.1 | Yes | Yes | 95.0% | 12% |
| Example 2 | 60% Methyl methacrylate | 35% Butyl acrylate | 5% Acrylonitrile | -10 | 350,000 | 18 | 1.1 | Yes | Yes | 94.0% | 15% |
| Example 3 | 100% Caprolactone | / | / | -50 | 400,000 | 15 | 1.8 | Yes | Yes | 94.3% | 16% |
| Example 4 | 100% Ethyl acrylate | / | / | -50 | 250,000 | 20 | 1.4 | Yes | Yes | 95.0% | 12% |
| Example 5 | 85% Vinyl acetate | 15% ethylene | / | 0 | 250,000 | 25 | 1.1 | Yes | No | 92.5% | 17% |
| Example 6 | 85% Vinyl acetate | 15% ethylene | / | 0 | 250,000 | 25 | 1.1 | No | Yes | 94.0% | 13% |

In Table 1, 100% methyl methacrylate means that based on a total mass of the monomer 1, the monomer 2, and the monomer 3, a mass percentage of methyl methacrylate is 100%.

85% vinyl acetate means that based on the total mass of the monomer 1, the monomer 2, and the monomer 3, a mass percentage of vinyl acetate is 85%. 15% ethylene means that based on the total mass of the monomer 1, the monomer, and the monomer 3, a mass percentage of ethylene is 15%.

It can be seen from Table 1 that as compared with Comparative example 1, in the examples of this application, the polymer of this application is added into the positive electrode plate and/or the negative electrode plate. The cycling performance and storage performance of the of the lithium-ion battery are improved. As compared with Comparative example 2, in the examples of this application, when $1<K<\infty$, especially $1<K\leq 100$, and optionally, $1<K\leq 10$ is met, the molecular chain arrangement tends to be loose, the action forces between molecular chains are weak, adjacent molecular chains are easily opened, and chain segment movement is realized through intermolecular rotation, so that a molecular chain structure with high flexibility is formed, and the cycling performance and storage performance of the lithium-ion battery can be more significantly improved.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A polymer applied to battery cells, wherein the polymer comprises an ester polymer;

   the ester polymer is made into a sheet structure; and
   the sheet structure undergoes dynamic frequency scanning testing at $(T_m+20)$°C to obtain an elastic modulus G'-energy loss modulus G" curve, wherein a slope of the elastic modulus G'-energy loss modulus G" curve is K, $1<K<\infty$, and $T_m$°C represents a melting temperature of the ester polymer.

2. The polymer according to claim 1, wherein $1<K\leq 100$, optionally $1<K\leq 10$.

3. The polymer according to claim 1 or 2, wherein
   a glass transition temperature of the ester polymer is Tg, in °C, wherein $-100\leq Tg\leq 50$, optionally $-80\leq Tg\leq 30$.

4. The polymer according to any one of claims 1 to 3, wherein the ester polymer comprises a structural unit shown in formula (I),

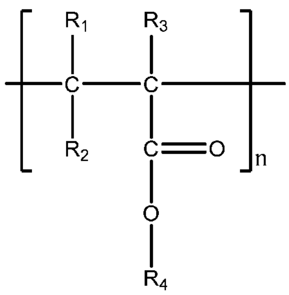

formula (I);

   wherein in the formula (I),
   $R_1$, $R_2$, and $R_3$ each independently comprise a hydrogen atom or a substituted or unsubstituted C1-C8 alkyl group; and
   $R_4$ comprises a substituted or unsubstituted C1-C8 alkyl group or a substituted or unsubstituted C1-C8 hydroxyalkyl group;
   optionally,
   $R_1$ comprises a hydrogen atom or a substituted or unsubstituted methyl group;
   $R_2$ and $R_3$ each independently comprise a hydrogen atom; and
   $R_4$ comprises a substituted or unsubstituted C1-C6 alkyl group or a substituted or unsubstituted C1-C6 hydroxyalkyl group; and

further optionally,
$R_4$ comprises a substituted or unsubstituted C1-C4 alkyl group or a substituted or unsubstituted C1-C4 hydroxyalkyl group.

**5.** The polymer according to claim 4, wherein the ester polymer comprises at least one of structural units shown in formula (I-1) to formula (I-15):

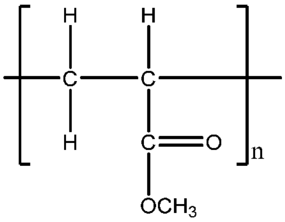

formula (I-1),

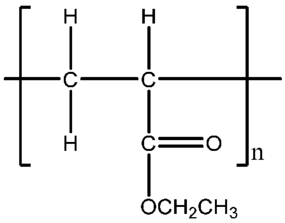

formula (I-2),

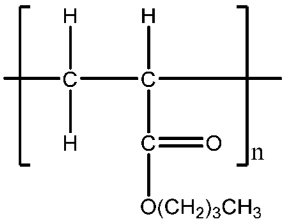

formula (I-3),

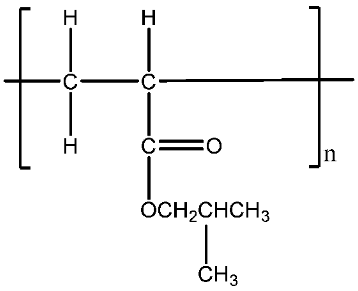

formula (I-4),

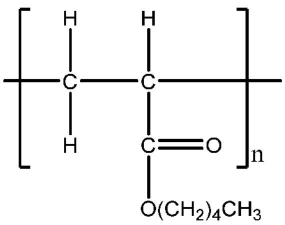

formula (I-5),

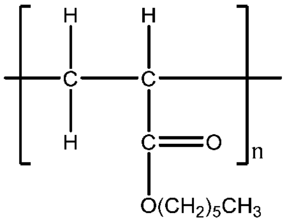

formula (I-6),

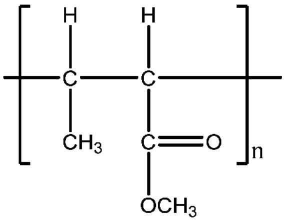

formula (I-7),

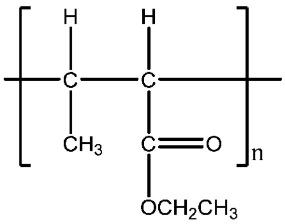

formula (I-8),

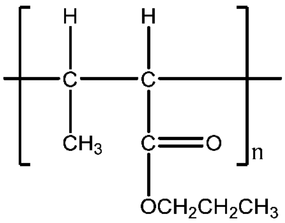

formula (I-9),

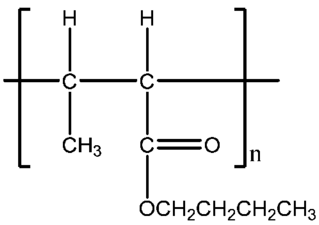

formula (I-10),

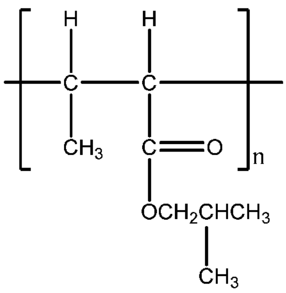

formula (I-11),

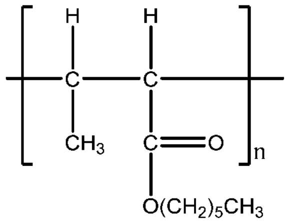

formula (I-12),

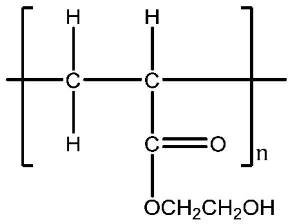

formula (I-13),

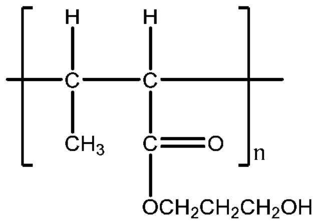

formula (I-14),

and

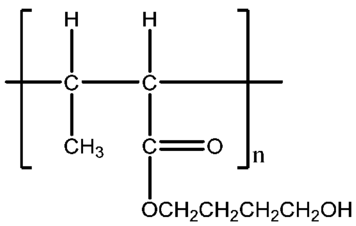

formula (I-15).

6. The polymer according to any one of claims 1 to 5, wherein the ester polymer comprises a structural unit shown in formula (II),

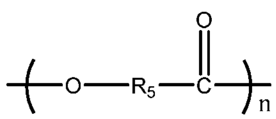

formula (II);

wherein in the formula (II),
$R_5$ comprises a substituted or unsubstituted C2-C6 methylene group; and
optionally, $R_5$ comprises a substituted or unsubstituted C2-C4 methylene group.

7. The polymer according to claim 6, wherein the ester polymer comprises at least one of structural units shown in formula (II-1) to formula (II-5):

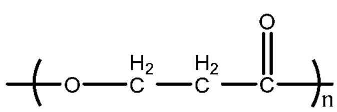

formula (II-1),

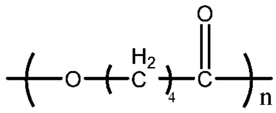

formula (II-2),

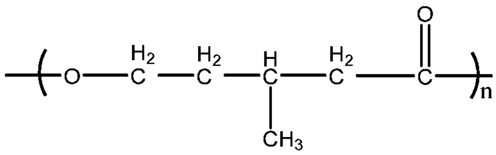

formula (II-3),

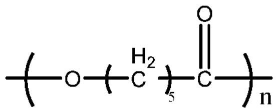

formula (II-4),

and

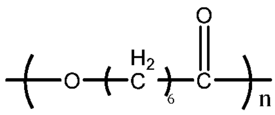

formula (II-5).

**8.** The polymer according to any one of claims 4 to 7, wherein

n is selected from positive integers from 800 to 20000; and/or
a molecular weight of the ester polymer is $1.2\times10^5$ g/mol to $1.0\times10^6$ g/mol.

**9.** The polymer according to any one of claims 1 to 8, wherein

the polymer is added into a first solvent at 45°C to form a polymer system; and
the polymer system is left standing at 45°C for 8 h; and after left standing at 25°C for 24 h or more, the polymer system is filtered through a 200-mesh filter to obtain a residual first substance;
wherein a mass of the polymer is n, in g; a mass of the first substance is m, in g; and the polymer and the first substance satisfy: $5\leq m/n\leq 1000$.

**10.** A positive electrode plate, comprising a positive electrode current collector and a positive electrode active substance layer disposed on the positive electrode current collector, wherein the positive electrode active substance layer comprises a positive electrode active substance and a polymer, and the polymer comprises the polymer according to any one of claims 1 to 9.

**11.** A negative electrode plate, comprising a negative electrode current collector and a negative electrode active substance layer disposed on the negative electrode current collector, wherein the negative electrode active substance layer comprises a negative electrode active substance and a polymer, and the polymer comprises the polymer according to any one of claims 1 to 9.

**12.** A battery cell, comprising a positive electrode plate and a negative electrode plate, wherein

the positive electrode plate comprises the positive electrode plate according to claim 10; and/or
the negative electrode plate comprises the negative electrode plate according to claim 11.

**13.** A battery, comprising the battery cell according to claim 12.

**14.** An electric apparatus, comprising the battery according to claim 13.

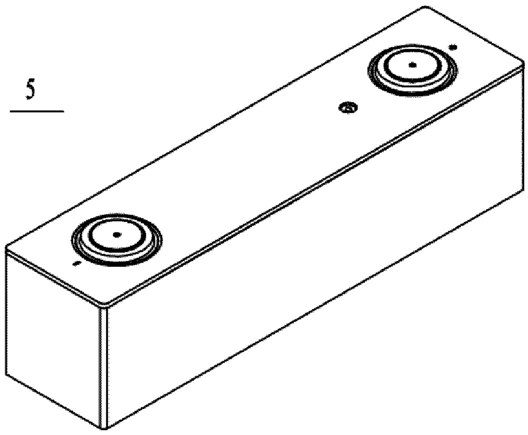


FIG. 1

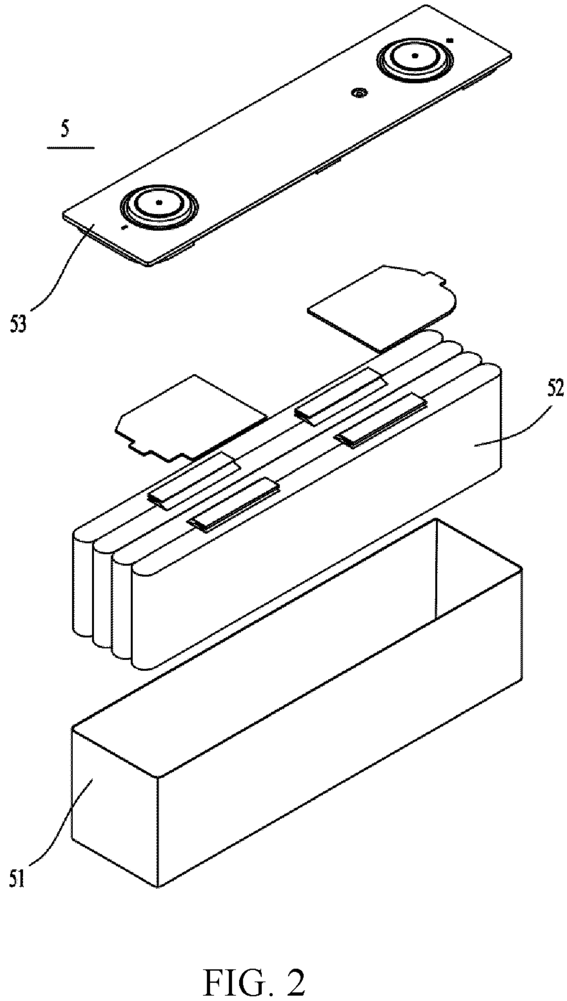


FIG. 2

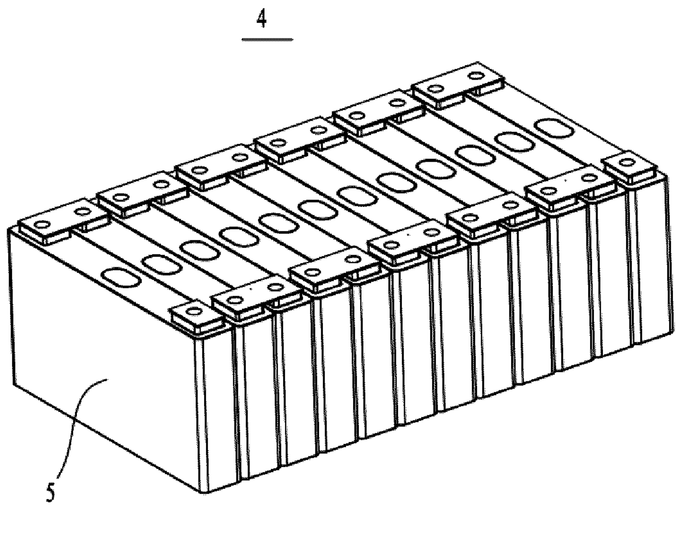


FIG. 3

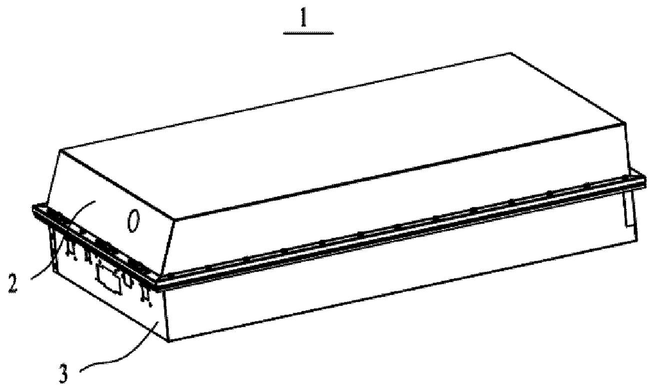


FIG. 4

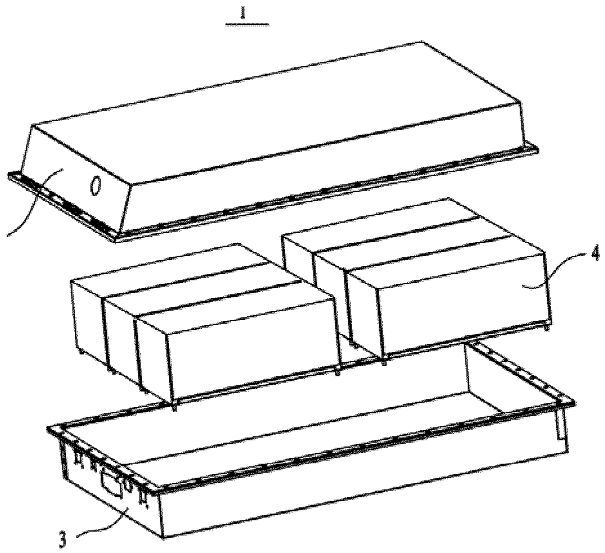


FIG. 5

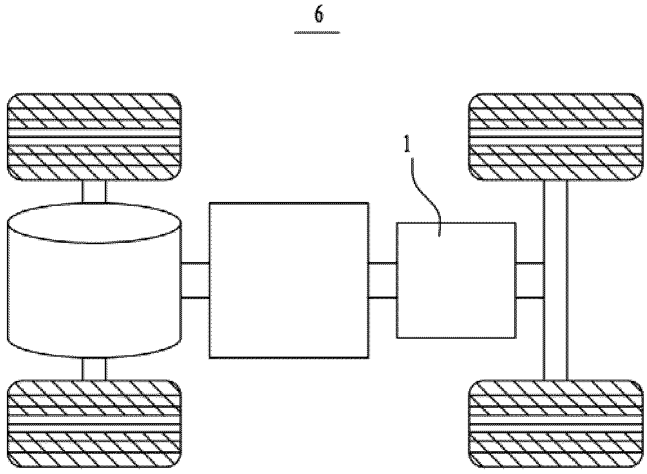


FIG. 6

## INTERNATIONAL SEARCH REPORT

International application No.
**PCT/CN2023/076809**

### A. CLASSIFICATION OF SUBJECT MATTER

H0H01M4/60(2006.01)i；H01M10/058(2010.01)i；C08F218/08(2006.01)i

According to International Patent Classification (IPC) or to both national classification and IPC

### B. FIELDS SEARCHED

Minimum documentation searched (classification system followed by classification symbols)

IPC:H01M C08F

Documentation searched other than minimum documentation to the extent that such documents are included in the fields searched

Electronic data base consulted during the international search (name of data base and, where practicable, search terms used)

CNABS, CNTXT, CNKI, VEN, ENTXT, ISI Web of Knowledge; 电池, 电极, 极片, 己内酯, 聚丙烯酸酯, 聚丙烯酸乙酯, 聚醋酸乙烯酯, 聚己内酯, 聚内酯, 聚酯, 内酯, 酯类聚合物, 弹性模量, 储能模量, 耗能模量, battery, electrode sheet, elastic modulus, storage modulus, loss modulus, energy consuming, polyester, polymethyl methacrylate, polyacrylate, polycaprolactone

### C. DOCUMENTS CONSIDERED TO BE RELEVANT

| Category* | Citation of document, with indication, where appropriate, of the relevant passages | Relevant to claim No. |
|---|---|---|
| X | CN 109119631 A (CONTEMPORARY AMPEREX TECHNOLOGY CO., LTD.) 01 January 2019 (2019-01-01)<br>embodiment 1, table 1, polymer 1, table 2, battery 1-8, and description, paragraph 55 | 1-5, 8-14 |
| Y | CN 109119631 A (CONTEMPORARY AMPEREX TECHNOLOGY CO., LTD.) 01 January 2019 (2019-01-01)<br>embodiment 1, table 1, polymer 1, table 2, battery 1-8, and description, paragraph 55 | 6-7 |
| Y | CN 114267815 A (ZHENGZHOU YUTONG GROUP CO., LTD.) 01 April 2022 (2022-04-01)<br>claim 1 | 6-7 |
| X | CN 114583173 A (EVE ENERGY CO., LTD.) 03 June 2022 (2022-06-03)<br>description, paragraphs 9-11 and 15 | 1-5, 9-14 |
| X | CN 109309230 A (CONTEMPORARY AMPEREX TECHNOLOGY CO., LTD.) 05 February 2019 (2019-02-05)<br>claims 1-10 | 1-5, 8-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2023** | **16 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

INTERNATIONAL SEARCH REPORT

International application No.
PCT/CN2023/076809

C. DOCUMENTS CONSIDERED TO BE RELEVANT

| Category* | Citation of document, with indication, where appropriate, of the relevant passages | Relevant to claim No. |
|---|---|---|
| A | CN 112175134 A (ZHUHAI COSMX BATTERY CO., LTD.) 05 January 2021 (2021-01-05) entire document | 1-14 |
| A | CN 113745454 A (BEIJING WELION NEW ENERGY TECHNOLOGY CO., LTD.) 03 December 2021 (2021-12-03) entire document | 1-14 |
| A | WO 2023010924 A1 (CONTEMPORARY AMPEREX TECHNOLOGY CO., LTD.) 09 February 2023 (2023-02-09) entire document | 1-14 |

Form PCT/ISA/210 (second sheet) (July 2022)

**INTERNATIONAL SEARCH REPORT**
**Information on patent family members**

International application No.
**PCT/CN2023/076809**

| Patent document cited in search report | Publication date (day/month/year) | Patent family member(s) | Publication date (day/month/year) |
|---|---|---|---|
| CN 109119631 A | 01 January 2019 | CN 109119631 B | 21 September 2021 |
| CN 114267815 A | 01 April 2022 | None | |
| CN 114583173 A | 03 June 2022 | None | |
| CN 109309230 A | 05 February 2019 | CN 109309230 B | 02 November 2021 |
| CN 112175134 A | 05 January 2021 | CN 112175134 B | 24 March 2023 |
| CN 113745454 A | 03 December 2021 | WO 2021238952 A1 | 02 December 2021 |
| | | EP 4160777 A1 | 05 April 2023 |
| | | US 2023216084 A1 | 06 July 2023 |
| WO 2023010924 A1 | 09 February 2023 | CN 115706296 A | 17 February 2023 |

Form PCT/ISA/210 (patent family annex) (July 2022)